# EUROPEAN PATENT SPECIFICATION

(11) **EP 1 174 316 B1**
(45) Date of publication and mention of the grant of the patent: **18.01.2006**
(21) Application number: 01305174.3
(22) Date of filing: 14.06.2001
(51) Int. Cl.: B60S 1/52, B60S 1/58, B60Q 1/44

(54) **Mounting structure for washer nozzle**
Montageanordnung für eine Waschdüse
Structure de montage pour buse de lavage

(30) Priority: 17.07.2000 JP 2000215795
(43) Date of publication of application: 23.01.2002
(73) Proprietor: NISSAN MOTOR COMPANY, LIMITED, Yokohama-shi, Kanagawa 221-0023 (JP)
(72) Inventor: Kinoshita, Daichi, Sagamihara-shi, Kanagawa-ken (JP); Yamamoto, Hiroyoshi, Sagamihara-shi, Kanagawa-ken (JP)
(74) Representative: Godwin, Edgar James

(56) References cited:
- EP-A- 0 255 218
- DE-C- 19 537 594
- FR-A- 2 705 291
- US-A- 5 211 466
- US-A- 5 621 942
- PATENT ABSTRACTS OF JAPAN vol. 1996, no. 12, 26 December 1996 (1996-12-26) -& JP 08 198151 A (TAMURA PLAST SEIHIN KK), 6 August 1996 (1996-08-06)
- PATENT ABSTRACTS OF JAPAN vol. 009, no. 297 (M-432), 25 November 1985 (1985-11-25) -& JP 60 135353 A (NISSAN JIDOSHA KK), 18 July 1985 (1985-07-18)

## Description

This invention relates to a mounting structure for a washer nozzle of a vehicle.

In mounting structures for washer nozzles of vehicles, it has been proposed to mount the washer nozzle onto a vehicle body over a rear window.

In particular, it has been a usual practice to locate the washer nozzle onto a rear edge portion of a roof panel or onto an upper edge portion of a rear gate as disclosed in Japanese Utility Model Registration No. 2526082.

However, in the event the washer nozzle is mounted onto the rear edge portion of the roof panel over the rear window or onto a body portion at an upper edge portion of the rear gate, in the related art practice, the washer nozzle projects outward from the structural part of the vehicle, adversely affecting an outer appearance of the vehicle body.

Since, in such a practice, an upper portion of the washer nozzle is usually covered with a nozzle cover which is made of black colored plastic, the outer appearance of the vehicle is apt to be emphasized in a protruding feeling provided by the nozzle cover in black color, resulting in a poor outer appearance of the vehicle.

To address this issue, it has been further proposed to have the nozzle cover to be coated with the same color with that of the body portion to alleviate the protruding feeling of the nozzle cover, such a practice encounters another disadvantage in that the manufacturing cost increases owing to an undesired additional working process needed for coating the nozzle cover with the same color as that of the body portion.

Further, in the event the washer nozzle is mounted onto the rear edge portion of the roof panel or onto the upper edge portion of the rear gate in the protruding manner, undesired difficulties are encountered in assembly of the vehicle body wherein, when peripheral components, for example, a rear spoiler is assembled to the body portion over the rear window, the peripheral components interfere with the washer nozzle. To solve this problem, another problem arises in the freedom in design such as industrial designs of the peripheral components.

Also, in the event both the washer nozzle and the high mount stop lamp assembly are mounted, since the high mount stop lamp assembly is interfered with the washer nozzle, the mounting position of the high mount stop lamp assembly is apt to be restricted.

Originally, while the high mount stop lamp assembly is required to be mounted onto the upper portion of the rear window at a position closest to the roof panel with a view to ensuring an increased rear visual range, location of the high mount stop lamp assembly in the vehicle compartment cannot be designed in the position closest to the roof panel, resulting in a deteriorated rear visual range.

It is therefore an object of the present invention to provide a mounting structure for a washer nozzle of a vehicle wherein the washer nozzle is mounted on an upper portion of a rear window without sacrificing an outer appearance or adversely affecting associated peripheral component parts.

FR-A-2 705 291 discloses a vehicle in accordance with the preamble of claim 1.

The present invention provides a vehicle including:
a rear window inclined downwardly and rearwardly;
a vehicle compartment in front of the rear window;
a mount case located in the vehicle compartment in the vicinity of the rear window;
a high mount stop lamp assembly fixedly supported on the mount case, the assembly including a plurality of light emitting devices supported by respective reflectors which are mounted on the mount case;
a washer nozzle comprising a nozzle body fixed to the rear window, the nozzle body having a nozzle portion projecting outward from the rear window, the nozzle body being laterally located in the widthwise direction of the vehicle between two adjacent ones of the light emitting devices; and
a conduit extending into the mount case and being connected to the washer nozzle within the mount case, for supplying washer liquid to the washer nozzle;
characterised in that:
   the mount case is upwardly open so that the upper edges of the reflectors are close to the rear window;
   the nozzle portion projects from the rear window at a position in front of the reflectors; and
   the nozzle body and the conduit connected to it are in front of the reflectors in the mount case and thereby hidden from forward view through the rear window.

The invention, together with objects and advantages thereof, may best be understood by reference to the following description of the presently preferred embodiments together with the accompanying drawings, in which:
F1G. 1 is a perspective view of a first preferred embodiment of a mounting structure for a washer nozzle according the present invention;
FIG. 2 is a top view of the mounting structure for the washer nozzle shown in FIG. 1; and
FIG 3 is a side, sectional view of a second preferred embodiment of a mounting structure for a washer nozzle according to the present invention.

To describe the present invention more in detail, preferred embodiments of the present invention will be explained with reference to the drawings below.

### First Embodiment

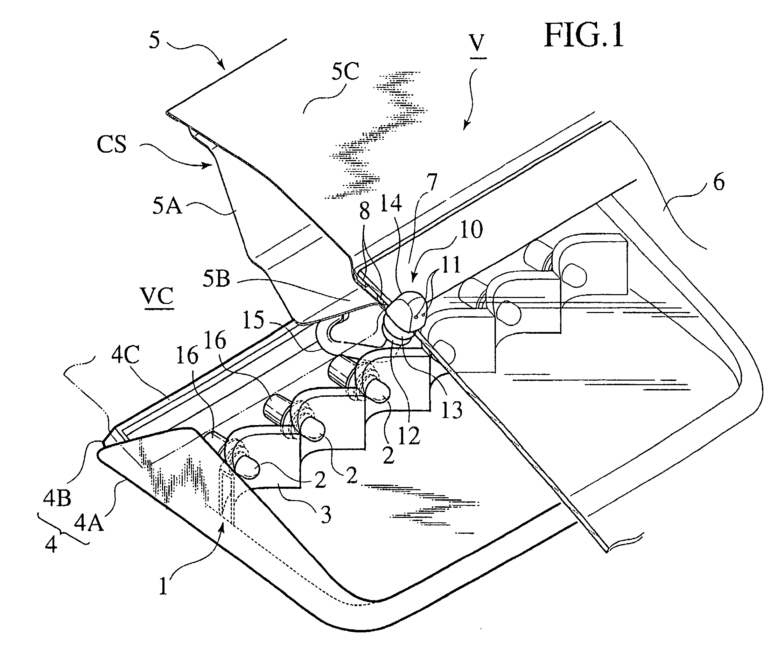

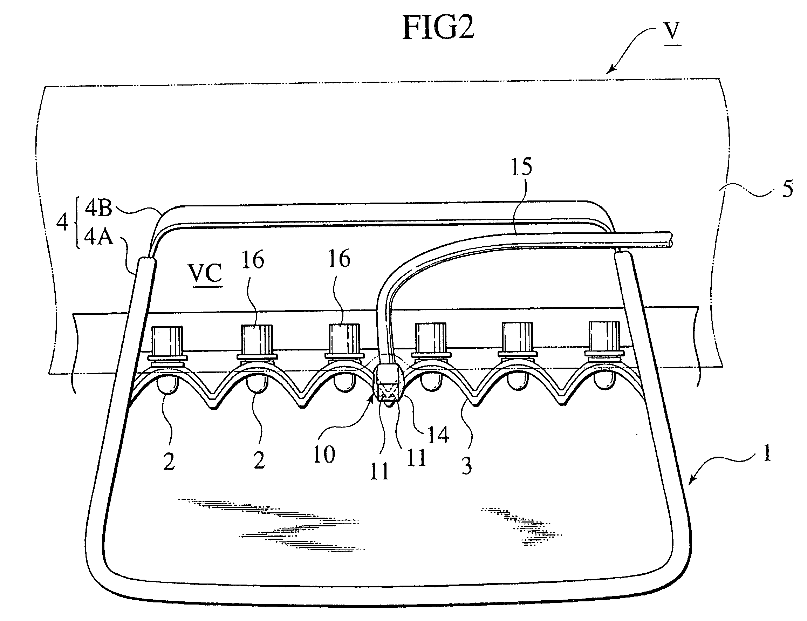

FIGS. 1 and 2 show a first preferred embodiment of a mounting structure of a washer nozzle of a vehicle, with the vehicle being shown as including a rear gate.

In FIGS. 1 and 2, the vehicle V has the rear gate 5 extending in widthwise direction of the vehicle in the vicinity of a rear edge portion of a roof panel (not shown). The rear gate 5 has a first inner panel 5A which extends rearward in a downward direction, a second inner panel 5B which extends rearward in an upward direction from a distal end of the first inner panel 5A, and an outer panel 5C which extends rearward from the rear edge portion of the roof panel (not shown) and is connected to a forward distal end of the first inner panel 5A and a rear distal end of the second inner panel 5B, thereby forming a closed structure CS in cross-section which extends in the widthwise direction of the vehicle. A rear end portion of the outer panel 5C supports an upper edge portion of a rear window 6, with seal members 8 being sandwiched in a junction area between the rear end portion of the outer panel 5C and the upper edge portion of the rear window 6 to provide a sealing effect.

A mount case 4 for mounting a high mount stop lamp assembly 1 in a unitary structure is located in a vehicle compartment VC in the vicinity of the rear window 6. The mount case 4 includes an upper, slightly inclined case component 4A which extends rearward toward an inner wall of the rear window 6 in the widthwise direction of the vehicle compartment VC, and a lower, horizontally extending case component 4B having its forward end formed with an upwardly bent portion 4C whose upper distal end is located adjacent the corner between the first and second inner panels 5A and 5B and its rear end coupled to a bent portion (not shown) of the upper case component 4A. The high mount stop lamp assembly 1 is fixedly mounted on the upper case component 4A at a forward end portion thereof in a manner as described below in detail. The lower case component 4B serves as a concealment member which conceals the high mount stop lamp assembly 1 and its associated component parts from an inside the vehicle compartment VC.

As previously noted above, the high mount stop lamp assembly 1 is located inside the vehicle compartment VC and fixedly mounted on the upper case component 4A at a position in the vicinity of a lower end wall of the closure structure CS of the rear gate 5. The high mount stop lamp assembly 1 includes a plurality of reflectors 3 laterally arranged in the widthwise direction of the vehicle compartment VC in a given lateral length of the vehicle compartment VC and fixedly secured to the upper case component 4A. The reflectors 3 carry respective bulbs 2, each of which extends in the inside of the reflector 3, with rear ends of the bulbs 3 being coupled to respective electrical connectors 16. As seen in FIGS. 1 and 2, the reflectors 3 are arranged in a row in the widthwise direction of the vehicle compartment VC such that the bulbs 2 and the electric connectors 16 extend in parallel to one another in a lengthwise direction of the vehicle V

A washer nozzle 10 is mounted onto the rear window 6 at an upper edge portion thereof and at a central portion thereof. The washer nozzle 10 includes a nozzle body 13 fixedly secured to the rear window 6, a nozzle portion 11 protruding upward from the nozzle body 13 beyond the rear window 6 to inject washer liquid thereto, and a connector portion 12 projecting downward from the nozzle body 13 and coupled to a conduit 15 connected to a washer unit (not shown) to supply washer liquid to the nozzle portion 11. The washer nozzle 10 also has a nozzle cover 14 which covers an upper area of the nozzle portion 11 that projects outward from the rear window 6, with the nozzle cover 14 being made of plastic in black color.

The conduit 15 connected to the washer nozzle 10 is accommodated in the mount case 4 of the high mount stop lamp assembly 1. The nozzle body 13 is located in a cavity formed between the adjacent bulbs 2 at a substantially central portion of the high mount stop lamp assembly 1.

In the first preferred embodiment shown in FIGS. 1 and 2, more particularly, the conduit 15 is received in a space surrounded with the mount case 4, the reflectors 3 of the high mount stop lamp assembly 1, and the rear window 6 at the inside of the reflectors 3 such that the conduit 15 is invisible through the rear window 6 from outside the vehicle compartment VC.

Also, the high mount stop lamp assembly 1 may preferably include an even number of the laterally arranged bulbs 2, with the washer nozzle 10 remaining in a substantially central portion of the high mount stop lamp assembly 1.

Further, the nozzle body 13 of the washer nozzle 10 is fixedly supported with the rear window 6 at the upper edge portion thereof, with the nozzle portion 11 protruding outward from the rear window 6.

As best seen in FIG 1, the rear window 6 has a concealment portion (i.e., a printed portion in black color) 7 formed at an upper edge portion of the rear window 6 for concealing the junction between the rear gate 5 and the rear window 6. In a usual practice, the concealment portion 7 is treated with black color in a printing process as performed in the illustrated embodiment or with a laced material.

When mounting the washer nozzle 10 onto the rear window 6 at the upper edge portion thereof, the nozzle portion 11 of the washer nozzle 10 is fixedly mounted to the concealment portion (i.e., the printed portion in black color) 7 such that the upper region of the nozzle portion 11 projects outward from the concealment portion 7.

In the illustrated embodiment discussed above, since the high mount stop lamp assembly 1 is mounted inside the vehicle compartment VC and the conduit 15 of the wind washer 10 is located in the mount case 4, there is no need for the high mount stop lamp assembly 1 and the washer nozzle 10 to be separately manufactured and located in the vehicle compartment VC at separate positions, respectively, that would otherwise be required in the related art practice. Thus, it is possible to alleviate the adverse affect as low as possible to be caused in the mounting position of the high mount stop lamp assembly 1 in a case where both the high mount stop lamp assembly 1 and the washer nozzle 10 are mounted in the vehicle compartment VC. Since, further, the high mount stop lamp assembly 1 can be located in the upper edge portion of the rear window 6 in the vicinity of the upper portion of the rear gate 5, the present invention allows the bottom portion of the high mount stop lamp assembly 1 to be settled in an upper region of the vehicle compartment VC, thereby ensuring an adequately widened visible range.

Also, since the nozzle body 13 of the washer nozzle 10 is located in the cavity defined between the adjacent bulbs 2 at the center of the high mount stop lamp assembly 1, the bulb 2 and its associated electrical parts such as the electrical connectors 16 to be connected to the respective electric wirings (not shown) are arranged to be dislocated from a critical area wherein washer liquid leaks from the junction between the nozzle body 13 and the conduit 15. Consequently, even when the junction between the nozzle body 13 and the conduit 15 leaks washer liquid, washer liquid is not splashed over the electric component parts of the bulbs 2, enhancing a highly reliable protection for the electrical connectors 16 of the bulbs 2 as well as the associated electric component parts.

In the first preferred embodiment discussed above, more particularly, since the conduit 15 is placed in the space surrounded with the mount case 4, the reflectors 3 and the rear window 6 at the inside of the reflectors 3, the conduit 15 of the washer nozzle 10 is reliably concealed without a specifically designed concealment structure such that the conduit 15 is invisible through the rear window 6 outside from the vehicle compartment VC, thereby allowing the conduit 15 to be connected with the mount case 4 having a simplified structure.

Further, provision of the even number of the bulbs 2 laterally arranged in the widthwise direction of the vehicle compartment VC and location of the washer nozzle 10 at the substantially central position of the high mount stop lamp assembly 1 enhances an increased freedom in industrial design of the vehicle in terms of a right and left symmetrical design, thereby providing an improved outward appearance in a high reliable fashion without any differential feelings in the outer appearance of the vehicle.

Since, furthermore, the washer nozzle 10 can be mounted onto the upper edge portion of the rear window 6, it is possible for the washer nozzle 10 to be directly placed in the concealment portion (i.e., the printed section in black color) 7 to allow the nozzle portion 11 to be covered with the nozzle cover made of plastic in black color at low cost, with a resultant reduction in manufacturing cost of the mounting structure of the washer nozzle 10.

Since, also, the nozzle cover made of plastic in black color is located on the concealment portion (i.e., the printed section in black color) 7, the correlated black color is effective for alleviating the protruding feeling of the washer nozzle 10 relative to the concealment portion of the rear window 6.

### Second embodiment

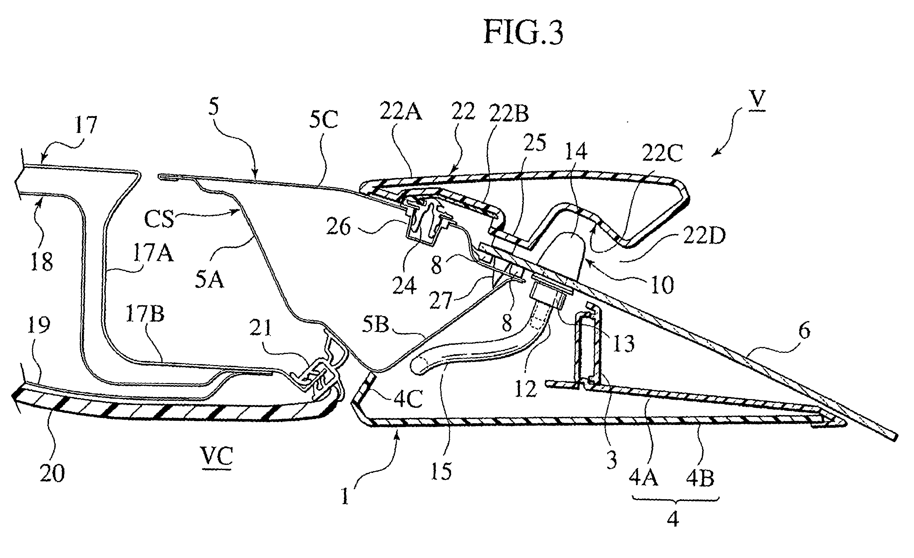

A second preferred embodiment of a mounting structure of a washer nozzle according to the present invention will now be described with reference to F1G. 3, which shows in cross-section a side view of a part of the vehicle V, with like parts or components elements bearing the same reference numerals as those used in FIGS. 1 and 2, duplicated description of the same components parts being omitted for the sake of simplicity.

In the second preferred embodiment shown in FIG 3, the vehicle V is shown as having a rear spoiler 22 which is fixedly secured to the rear end portion of the outer panel 5C of the rear gate 5 located rearward of the roof panel 17, a part of which is shown in FIG 3. The roof panel 17 has a downwardly extending vertical wall portion 17A and a horizontal wall portion 17B bent from a lower distal end of the vertical portion 17A and extending rearward. The roof panel 17 includes inner panels 18 and 19, secured to the roof panel by some suitable means such as welding, and a gently curved trimming member 20 which extends rearward from a front portion of the vehicle compartment VC and which has its rear edge fixedly retained with a rear distal end of the horizontal wall portion 17B of the roof panel 17 and a lower wall portion of the inner panel 5A of the rear gate 5 by means of a retaining seal member 21. The seal member 21 is fixedly secured to the rear edge of the roof panel 17 and the lower end portion of the inner panel 5A so as to enshroud the rear edge of the trimming member 20, thereby providing a sealing effect between the vehicle compartment VC and the outside thereof. Such a retaining seal member 21 is collapsed or compressed in contact with the inner panel 5A of the rear gate 5 to provide a sealing effect between the vehicle compartment and the outside thereof under a condition wherein the rear gate 5 remains in its closed position.

The rear spoiler 22 is mounted onto the outer panel 5C in close proximity to the junction between the rear gate 5 and the rear window 6.

More particularly, the rear spoiler 22 has a substantially flat top wall 22A which laterally extends in the widthwise direction of the automotive vehicle V, and a bracket 22B which extends rearward from a frontal end of the flat wall 22B, with the bracket 22B including clips 24 and 25. A rear end portion of the outer panel 5C has first and second rows of apertures 26 and 27 laterally located in the widthwise direction of the vehicle V to allow the clips 24 and 25 to be firmly fitted to the apertures 26 and 27, respectively, such that the rear spoiler 22 is firmly fixed to the outer panel 5C.

A rear end portion of the rear spoiler 22 is inwardly formed with a concave portion 22A defined around an outer periphery of a mounting area of the washer nozzle 10 to avoid the rear spoiler 22 to interfere with the washer nozzle 10 while providing a rear access opening 22D to allow the washer nozzle 10 to inject washer liquid rearward without any obstacles.

In the second preferred embodiment shown in FIG 3, the concealment portion (i.e., the printed area in black color) 7 of the rear window 6 is omitted for the sake of simplicity.

According to a structure of the second preferred embodiment, since the washer nozzle 10 is mounted onto the rear window 6 outside the vehicle compartment VC , it is possible for peripheral component parts of the rear spoiler 22, which is firmly secured to the outer panel 5C of the rear gate 5 as in a structure of the related art, not to interfere with the washer nozzle 10, thereby enhancing the freedom for design of associated peripheral component parts.

In the second preferred embodiment, further, although the rear spoiler 22 is formed with the inward concave portion 22C in the region around the periphery of the washer nozzle 10 to protect the washer nozzle 10 from interfering the rear spoiler 22, the location of the washer nozzle 10 on the rear window 6 does not afford any adverse affect on design for the rear spoiler 22 in terms of the outer appearance and the mounting position thereof.

In terms of an important aerodynamic property, furthermore, since an upper surface of the rear spoiler 22 and an upper surface of the rear gate 5, which extends from the rear end portion of the roof panel 17, can be aligned substantially in the same plane in contrast to the related art practice in terms of an important aerodynamic property, it is possible to remarkably enhance the freedom in designing practice of associated peripheral component parts.

The mounting structure for the washer nozzle of the present invention provides numerous advantages over the related art practices and which include:
(A) Restrictions found in design engineering of the vehicle body in terms of the mounting position of the washer nozzle are greatly improved to provide an improved design in the outer appearance of the vehicle while providing an increased rear visible range by mounting the high mount stop lamp assembly on the mount case within the vehicle compartment with the conduit of the washer nozzle being located in the mount case. This is achieved by minimizing the restriction in the mounting space for the high mount stop lamp assembly to allow the same to be located in the upper edge portion of the rear window such that the bottom position of the high mount stop lamp assembly is raised in the upward position of the vehicle compartment, ensuring an adequately increased rear visible range.
(B) Locating the washer nozzle in the space between the adjacent bulbs of the high mount stop lamp assembly avoids the presence of the electrical connectors or the electrical component parts for connecting the bulbs and the electrical wirings directly below the junction between the washer nozzle and the conduit. With such an arrangement, even when the junction between the washer nozzle and the conduit leaks washer liquid, washer liquid is not splashed over the electrical connecting parts such as the electrical connectors of the bulbs, thereby ensuring a protection for the electrical parts in a highly reliable manner.
(C) Locating the upper end portion of the washer nozzle having the nozzle portion on the rear window in the protruding manner outside the vehicle compartment avoids the interference between the washer nozzle and the peripheral component parts such as the rear spoiler to be mounted onto the body portion that would be otherwise caused in the related art practices. This results in an increased freedom in design engineering for the vehicle body in terms of the peripheral components parts surrounding the washer nozzle.
(D) Owing to the conduit located in the rear side of the high mount stop lamp assembly at a space surrounded with the mount case, the reflectors and the rear window, it is not necessary to employ a specifically designed concealing structure to allow the conduit to be invisible from outside the vehicle compartment via the rear window. It is thus possible for the conduit of the washer nozzle to be received in the mount case inn a simplified structure without sacrificing the outer appearance of the vehicle body.
(E) Location the even number of the bulbs of the high mount stop lamp assembly in the widthwise direction of the vehicle while mounting the washer nozzle in the substantially central portion of the high mount stop lamp assembly allows the outer appearance of the vehicle body to be designed in the symmetric fashion, thereby preventing the differential feeling to be provided in the outer appearance of the vehicle body to provide the improved outer appearance.
(F) Owing to the washer nozzle designed to be located on the upper edge portion of the rear window, the washer nozzle is enabled to be mounted in the concealment portion of the rear window treated with the black colored printed section to cause the junction between the vehicle body and the rear window to be invisible from outside through the rear window. With such an arrangement, the nozzle cover may be made of low cost, black colored plastic, with a resultant reduction in the manufacturing cost of the vehicle.
(G) Mounting the washer nozzle made of the black colored plastic onto the concealed portion (i.e., the printed portion with black color) of the upper end portion of the rear window is effective for alleviating the protruding feeling provided by the washer nozzle to provide an improved outer appearance.

In the first and second preferred embodiments discussed above, although the mounting structure of the washer nozzle for the vehicle to which the present invention is applied has been shown and described as applied to an automotive vehicle equipped with a rear gate, it is needless to say that the present invention is not limited thereto and may also be applied to other types of vehicles such as usual sedan type vehicles or coupe type vehicles wherein the rear gate is dispensed with and the rear window is mounted so as to be contiguous to the rear edge of the roof panel with resultant similar advantages.

## Claims

1. A vehicle including:
a rear window (6) inclined downwardly and rearwardly;
a vehicle compartment (VC) in front of the rear window;
a mount case (4) located in the vehicle compartment (VC) in the vicinity of the rear window;
a high mount stop lamp assembly (1) fixedly supported on the mount case (4), the assembly (1) including a plurality of light emitting devices (2) supported by respective reflectors (3) which are mounted on the mount case (4);
a washer nozzle (10) comprising a nozzle body (13) fixed to the rear window (6), the nozzle body having a nozzle portion (11) projecting outward from the rear window (6), the nozzle body being laterally located in the widthwise direction of the vehicle between two adjacent ones of the light emitting devices (2); and
a conduit (15) extending into the mount case (4) and being connected to the washer nozzle (10) within the mount case (4), for supplying washer liquid to the washer nozzle (10);
**characterised in that**:
the mount case (4) is upwardly open so that the upper edges of the reflectors (3) are close to the rear window (6);
the nozzle portion (11) projects from the rear window (6) at a position behind the reflectors (3); and
the nozzle body (13) and the conduit (15) connected to it are behind the reflectors (3) in the mount case (4) and thereby hidden from forward view through the rear window (6).

2. A vehicle according to claim 1, wherein the high mount stop lamp assembly (1) has an even number of light emitting devices (2) laterally located in the widthwise direction of the vehicle, and the washer nozzle (10) is located in the vicinity of a central portion of the high mount stop lamp assembly (1).

3. A vehicle according to claims 1 or 2, wherein the washer nozzle (10) is mounted on an upper edge portion of the rear window (6).

4. A vehicle according to any preceding claim, having a rear gate (5), the rear window (6) formed with a concealment portion (7) at its upper edge portion to conceal a junction between the rear gate and an upper edge portion of the rear window, the washer nozzle (10) being mounted on the concealment portion of the rear window (6).

5. A vehicle according to any preceding claim, having a rear gate (5) and having a rear spoiler (22) mounted on a rear portion of the vehicle body above the washer nozzle (10).

6. A vehicle according to claim 5, wherein the rear spoiler (22) includes a bracket (22B) fixedly secured to the rear portion of the vehicle body and a concave portion (22C) to receive the washer nozzle (10) therein.

## Patentansprüche

1. Fahrzeug, das Folgendes umfasst:
ein Heckfenster (6), das nach unten und nach hinten geneigt ist;
einen Fahrzeuginnenraum (VC) vor dem Heckfenster;
einen Montagerahmen (4), der sich im Fahrzeuginnenraum (VC) in der Nähe des Heckfensters befindet;
eine hochgesetzte Bremslichtbaugruppe (1), die unbeweglich am Montagerahmen (4) gelagert ist, wobei die Baugruppe (1) eine Mehrzahl von Leuchtvorrichtungen (2) aufweist, die von jeweiligen Rückstrahlern (3) getragen werden, die am Montagerahmen (4) montiert sind;
eine Waschdüse (10), die einen Düsenkörper (13) umfasst, der am Heckfenster (6) befestigt ist, wobei der Düsenkörper einen Düsenteil (11) aufweist, der vom Heckfenster (5) nach außen vorsteht, wobei der Düsenkörper seitlich in der Breitenrichtung des Fahrzeugs zwischen zwei benachbarten der Leuchtvorrichtungen (2) positioniert ist; und
eine Leitung (15), die in den Montagerahmen (4) verläuft und mit der Waschdüse (10) in dem Montagerahmen (4) verbunden ist, um der Waschdüse (10) Waschflüssigkeit zuzuführen;
**dadurch gekennzeichnet, dass**:
der Montagerahmen (4) nach oben offen ist, so dass die Oberkanten der Rückstrahler (3) nahe am Heckfenster (6) liegen;
der Düsenteil (11) vom Heckfenster (6) an einer Position hinter den Rückstrahlern (3) vorsteht; und
der Düsenkörper (13) und die damit verbundene Leitung (15) hinter den Rückstrahlern (3) in dem Montagerahmen (4) liegen und dadurch vor der Sicht nach vorne durch das Heckfenster (6) verborgen sind.

2. Fahrzeug nach Anspruch 1, wobei die hochgesetzte Bremslichtbaugruppe (1) eine gerade Zahl von Leuchtvorrichtungen (2) hat, die sich seitlich in der Breitenrichtung des Fahrzeugs befinden, und die Waschdüse (10) sich in der Nähe eines mittleren Teils der hochgesetzten Bremslichtbaugruppe (1) befindet.

3. Fahrzeug nach Anspruch 1 oder 2, wobei die Waschdüse (10) an einem Oberkantenteil des Heckfensters (6) montiert ist.

4. Fahrzeug nach einem der vorherigen Ansprüche mit einer Heckklappe (5), wobei das Heckfenster (6) am oberen Randabschnitt mit einer Abdeckblende (7) ausgebildet ist, um einen Übergang zwischen der Heckklappe und einem oberen Randabschnitt des Heckfensters zu verbergen, wobei die Waschdüse (10) an der Abdeckblende des Heckfensters (6) montiert ist.

5. Fahrzeug nach einem der vorherigen Ansprüche mit einer Heckklappe (5) und mit einem Heckspoiler (22), der an einem Heckteil der Fahrzeugkarosserie über der Waschdüse (10) montiert ist.

6. Fahrzeug nach Anspruch 5, wobei der Heckspoiler (22) eine Halterung (22B), die starr am Heckteil der Fahrzeugkarosserie befestigt ist, und einen konkaven Abschnitt (22C) zur Aufnahme der Waschdüse (10) darin aufweist.

## Revendications

1. Véhicule, englobant:
une vitre arrière (6) inclinée vers le bas et vers l'arrière;
un compartiment du véhicule (VC) en face de la vitre arrière;
un boîtier de support (4) agencé dans le compartiment du véhicule (VC), au voisinage de la vitre arrière;
un assemblage de feu d'arrêt à montage en hauteur (1), supporté fermement sur le boîtier de support (4), l'assemblage (1) englobant plusieurs dispositifs d'émission de lumière (2) supportés par des réflecteurs respectifs (3) montés sur le boîtier de support (4);
une buse de lavage (10) comprenant un corps de buse (13) fixé sur la vitre arrière (6), le corps de la buse comportant une partie de buse (11) débordant vers l'extérieur de la vitre arrière (6), le corps de la buse étant agencé latéralement dans la direction de la largeur du véhicule entre deux dispositifs d'émission de lumière adjacents (2); et
un conduit (15) s'étendant dans le boîtier de support (4) et raccordé à la buse de lavage (10) dans le boîtier de support (4) pour alimenter la buse de lavage (10) en liquide de lavage ;
**caractérisé en ce que** :
le boîtier de support (4) est ouvert vers le haut, de sorte que les bords supérieurs des réflecteurs (3) sont proches de la vitre arrière (6);
la partie de buse (11) déborde de la vitre arrière (6) au niveau d'une position située derrière les réflecteurs (3); et
le corps de la buse (13) et le conduit (15) qui y est raccordé sont agencés derrière les réflecteurs (3) dans le boîtier de support (4) et cachés ainsi de la vue avant à travers la vitre arrière (6).

2. Véhicule selon la revendication 1, dans lequel l'assemblage de feu arrière à montage en hauteur (1) comporte un nombre pair de dispositifs d'émission de lumière (2) agencés latéralement dans la direction de la largeur du véhicule, la buse de lavage (10) étant agencée au voisinage d'une partie centrale de l'assemblage de feu d'arrêt à montage en hauteur (1).

3. Véhicule selon les revendications 1 ou 2, dans lequel la buse de lavage (10) est montée sur une partie de bordure supérieure de la vitre arrière (6).

4. Véhicule selon l'une quelconque des revendications précédentes, comportant une porte arrière (5), la vitre arrière (6) comportant une partie de masquage (7) au niveau de sa partie de bordure supérieure pour cacher une jonction entre la porte arrière et une partie de bordure supérieure de la vitre arrière, la buse de lavage (10) étant montée sur le partie de masquage de la vitre arrière (6).

5. Véhicule selon l'une quelconque des revendications précédentes, comportant une porte arrière (5) et un aileron arrière (22) monté sur une partie arrière de la carrosserie du véhicule, au-dessus de la buse de lavage (10).

6. Véhicule selon la revendication 5, dans lequel l'aileron arrière (22) englobe une console (22B) fixée fermement sur la partie arrière de la carrosserie du véhicule, et une partie concave (22C) pour recevoir la buse de lavage (10).
